# EUROPEAN PATENT APPLICATION

(11) **EP 4 187 764 A1**
(43) Date of publication of application: **31.05.2023**
(21) Application number: 22210170.1
(22) Date of filing: 29.11.2022
(51) Int. Cl.: H02M 1/00, H02M 3/07, H02M 3/158, H02M 7/483

(54) **CHARGING CIRCUIT**

(30) Priority: 29.11.2021 CN 202111435259
(71) Applicant: Silergy Semiconductor Technology (Hangzhou) Ltd, Hangzhou City, Zhejiang 310051 (CN)
(72) Inventor: CHEN, Siyuan, Hangzhou City, Zhejiang Province 310051 (CN); WEN, Sihua, Hangzhou City, Zhejiang Province 310051 (CN)
(74) Representative: Viering, Jentschura & Partner mbB Patent- und Rechtsanwälte

(57) **Abstract**

A charging circuit is disclosed. The charging circuit utilizes multi-level technology to improve the efficiency of the charging circuit under the premise of maintaining the boosting, bucking, and bucking-boosting functions of the traditional buck-boost topology. Especially under the circumstance of high input voltage, it can give full play to the advantages of multi levels. The switching loss, withstand voltage requirements of power MOSFTs, and inductance are reduced, and the efficiency is improved.

## Description

### BACKGROUND

### Field of the Invention

The present disclosure relates to a technical field of power electronics, more particularly, to a charging circuit.

### Related Art

With the improvement of processor performance of portable devices, power dissipation and battery capacity continuously increases. The previous 100W USB PD 20V/5A power supply no longer satisfies the demand. Due to the limitation of USB cables and interfaces, the current is difficult to be increased. Hence, the transmission power of the latest USB PD 3.1 needs increasing by methods about increasing the voltage. As a result, the input voltage of the traditional buck-boost charger is significantly increased, and thus the efficiency of the traditional buck-boost charger is decreased significantly, especially in the high input voltage scenarios of USB PD 3.1, such as 28V, 36V, and 48V. Based on the aforementioned description, there is an urgent need to resolve this problem by providing a high efficiency charger.

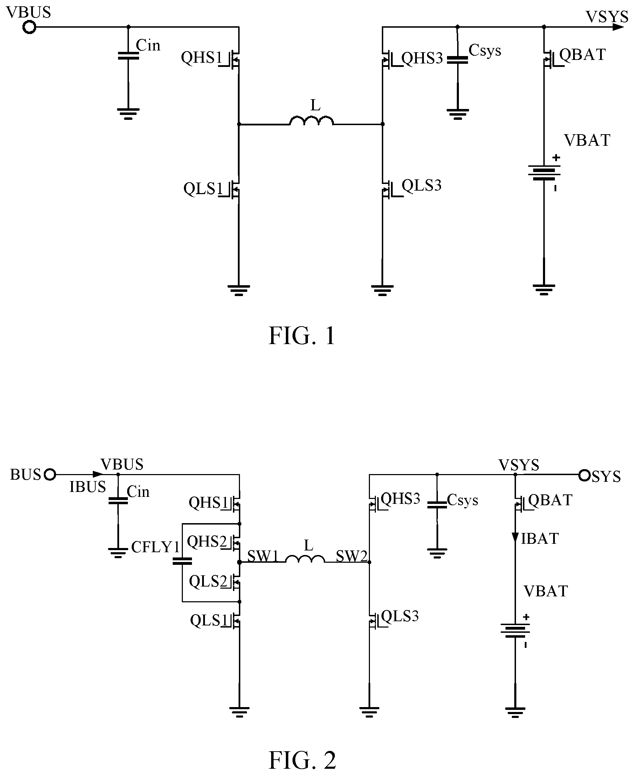

Fig. 1 is a circuit diagram of a buck-boost charging circuit in the related art. As shown in Fig. 1, the charging circuit can allow the input voltage to be lower than, equal to, or higher than the output (system/battery) voltage. The charging circuit has the highest efficiency when the input voltage approaches the output voltage. If the input voltage is higher than the system voltage, the charging circuit would work in the buck mode. However, the efficiency of the charging circuit will significantly drop when the input voltage is much higher than the output voltage. A power transistor QBAT is used for path management, and will work in a linear region, a saturation region, or a cutoff region according to the charging state to satisfy the requirements of charging current.

### SUMMARY

In light of the aforementioned description, one objective of the present disclosure is to provide a new charging circuit to utilize multi-level technology to improve the efficiency of the charging circuit under the premise of maintaining the boosting, bucking, and bucking-boosting functions of the traditional buck-boost topology.

A first aspect of the present disclosure provides a charging circuit. The charging circuit includes a first module, a second module, and at least one inductor. The first module includes a plurality of power transistors and is connected between a first port and a reference ground. The second module includes a plurality of power transistors and is connected between a second port and the reference ground. The inductor is connected between the first module and the second module. The first module and/or the second module respectively form multi-level converters with the at least one inductor.

In some embodiments, the charging circuit is configured to be controlled to respectively operate in a buck mode or a boost mode or a buck-boost mode according to a magnitude relationship between an input voltage and an output voltage.

In some embodiments, the power transistors of the charging circuit are controlled by a control circuit to be in different switching states, such that the charging circuit is smoothly switched among the buck mode, boost mode or buck-boost mode

In some embodiments, the first module and the inductor form a multi-level buck converter. The second module and the inductor form a boost converter. The first port receives an input voltage. The second port generates an output voltage.

In some embodiments, when a ratio of the input voltage to the output voltage is higher than a first threshold value, the charging circuit operates in a multi-level buck mode. When the ratio of the input voltage to the output voltage is lower than a second threshold value, the charging circuit operates in a boost mode. When the ratio of the input voltage to the output voltage is between the first threshold value and the second threshold value, the charging circuit operates in a buck-boost mode.

In some embodiments, when the charging circuit operates in the multi-level buck mode, the power transistors of the first module are in a PWM switching state to be alternately turned on and off, the power transistors of the second module are kept normally on or off.

In some embodiments, when the charging circuit operates in the boost mode, the power transistors of the first module are kept normally on or off, the power transistors of the second module are in a PWM switching state to be alternately turned on and off.

In some embodiments, a switching frequency of the power transistors in a PWM switching state in a boost mode is N times a switching frequency of the power transistors in the PWM switching state in a multi-level buck mode, in which N is a positive integer greater than or equal to 2, and depends on a number of levels of the multi-level converter.

In some embodiments, when the charging circuit operates in the buck-boost mode, the power transistors of both the first module and the second module are in the PWM switching state to be alternately turned on and off.

In some embodiments, when the charging circuit operates in the buck-boost mode, part of the power transistors in the first module are kept normally on and the other power transistors in the first module are in a PWM switching state to be alternately turned on and off, so that the charging circuit is equivalent to a four-switch buck-boost converter.

In some embodiments, the first module includes a first power transistor, a second power transistor, a third power transistor, and a fourth power transistor connected in series between the first port and the reference ground sequentially, and a flying capacitor connected between a common connection point of the first power transistor and the second power transistor and a common connection point of the third power transistor and the fourth power transistor.

In some embodiments, the second module includes a fifth power transistor and a sixth power transistor connected in series between the second port and the reference ground.

In some embodiments, the inductor is connected between a common connection point of the second power transistor and the third power transistor and a common connection point of the fifth power transistor and the sixth power transistor.

In some embodiments, the charging circuit further includes a seventh power transistor and a battery. The battery is connected in series with the seventh power transistor between the second port and the reference ground. The seventh power transistor is controlled to work in a complete conduction region, a linear region, or a cutoff region according to a charging state of the battery to satisfy requirements of a charging current.

In some embodiments, the first module and the inductor form a multi-level boost converter, and the second module and the inductor form a buck converter. The second port receives an input voltage, and the first port generates an output voltage.

In some embodiments, multi-level converter formed by the first module and/or the second module includes a plurality of branches connected in parallel, and each of the branches includes a plurality of power transistors connected in series between the first port and/or the second port and the reference ground. Each of the branches is connected to the another module respectively through one inductor to form a multi-phase multi-level converter.

In some embodiments, the first module and the inductor form the buck converter, the second module and the inductor form the multi-level boost converter. The first port receives the input voltage, and the second port generates the output voltage.

In some embodiments, the first module and the inductor form the multi-level buck converter, the second module and the inductor form the multi-level boost converter. The first port receives the input voltage, the second port generates the output voltage.

In some embodiments, the charging circuit further includes a control circuit. The control circuit is configured to receive a plurality of control parameters and a plurality of reference signals respectively corresponding to the plurality of control parameters, so as to control one of the control parameters to be equal to its corresponding reference signal and to control the other control parameters to be not greater than or not smaller than their corresponding reference signals.

In some embodiments, the control circuit includes a plurality of error amplifiers and a selection circuit. The plurality of error amplifiers respectively receives the plurality of control parameters and the plurality of reference signals. The selection circuit is configured to receive output signals of the error amplifiers and select a smallest one among the output signals of the error amplifiers as a compensation signal.

In some embodiments, the control circuit further includes a first comparator, a second comparator, and a third comparator. The first comparator is configured to compare the compensation signal with a first ramp signal to generate drive signals for controlling the first power transistor and the fourth power transistor, and the drive signals of the first power transistor and the fourth power transistor are complementary to each other. The second comparator is configured to compare the compensation signal with a second ramp signal to generate drive signals for controlling the second power transistor and the third power transistor, and the drive signals of the second power transistor and the third power transistor are complementary to each other. The third comparator is configured to compare the compensation signal with a third ramp signal to generate drive signals for controlling the fifth power transistor and the sixth power transistor, and the drive signals of the fifth power transistor and the sixth power transistor are complementary to each other.

In some embodiments, a period of the first ramp signal and a period of the second ramp signal are the same, amplitudes and change trends of the first ramp signal and the second ramp signal are the same, and there is a phase difference of 180° between the first ramp signal and the second ramp signal. A period of the third ramp signal is half of the period of the first ramp signal, and a change trend of the third ramp signal is opposite to the change trend of the first ramp signal, a minimum value of the third ramp signal is lower than a maximum value of the first ramp signal.

In summary, the charging circuit according to the present disclosure utilizes multi-level technology to improve the efficiency of the charging circuit under the premise of maintaining the boosting, bucking, and bucking-boosting functions of the traditional buck-boost topology. Especially under the circumstance of high input voltage, the charging circuit may give full play to the advantages of multi levels. The switching loss, withstand voltage requirements of power metal-oxide-semiconductor field-effect transistors (MOSFET), and inductance are reduced, and the efficiency of the charging circuit is improved.

Other features and advantages of the present disclosure will be explained in the following description, and will partially become apparent from the description or be appreciated by implementing the present disclosure. The objectives and other advantages of the present disclosure may be realized and obtained by structures particularly specified in the description, the appended claims and the accompanying drawings.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
Fig. 1 is a circuit diagram of a buck-boost charging circuit in the related art.
Fig. 2 is a circuit diagram of a charging circuit according to a first embodiment of the present disclosure.
Fig. 3 is a logic block diagram of a control circuit of a charging circuit according to one embodiment of the present disclosure.
Fig. 4 is a waveform diagram of ramp signals in a control circuit according to one embodiment of the present disclosure.
Fig. 5 is a waveform diagram of example operation of a charging circuit in a buck mode according to one embodiment of the present disclosure.
Fig. 6 is an equivalent circuit diagram of a charging circuit in a buck mode according to one embodiment of the present disclosure.
Fig. 7 is a waveform diagram of example operation of a charging circuit in a boost mode according to one embodiment of the present disclosure.
Fig. 8 is an equivalent circuit diagram of a charging circuit in a boost mode according to one embodiment of the present disclosure.
Fig. 9 is a waveform diagram of example operation of a charging circuit in a buck-boost mode according to one embodiment of the present disclosure.
Fig. 10 is an equivalent circuit diagram of a charging circuit in a buck-boost mode according to a second embodiment of the present disclosure.
Fig. 11 is an equivalent circuit diagram of a charging circuit in a buck-boost mode according to a third embodiment of the present disclosure.
Fig. 12 is a circuit diagram of a charging circuit according to a second embodiment of the present disclosure.
Fig. 13 is a circuit diagram of a charging circuit according to a third embodiment of the present disclosure.
Fig. 14 a circuit diagram of a charging circuit according to a fourth embodiment of the present disclosure.

### DESCRIPTION OF THE EMBODIMENTS

The present disclosure is described below with reference to the embodiments, however, the present disclosure is not limited thereto. The following detailed description of the disclosure elaborates on some specific details. Those skilled in the art can fully understand the present disclosure without the description of these details. Well-known methods, procedures, processes, components and circuits are not described in detail to avoid obscuring the essence of the present disclosure.

In addition, those skilled in the art should understand that drawings are only for the purpose of illustration and are not drawn to scale.

At the same time, it should be understood that in the following description, "circuit" refers to a conducting loop formed by at least one component or sub-circuit through electrical connection or electromagnetic connection. When a component or circuit is referred to as being "connected" to another component or a component/circuit is referred to as being "connected" between two nodes, it may be directly coupled or connected to another component or intervening component(s) may be present. The connection between the components may be physical, logical, or a combination thereof. On the contrary, when a component is referred to as being "directly coupled" or "directly connected" to another component, it is meant that there are no intervening component(s) present therebetween.

Unless otherwise required by the context, it will be understood that in the whole description herein and throughout the claims that follow, the terms "comprise" or "comprising," "include" or "including" and the like used herein are to be understood to be open-ended, that is, including but not limited to.

In the description of the present disclosure, it should be noted that the terms "first" and "second" are only used for the purpose of description, and should not be construed as indicating or implying relative importance. Additionally, in the description of the present disclosure, "plural" means two or more unless otherwise specified.

According to the embodiment of the present disclosure, a charging circuit includes a first module, a second module, and an inductor. The first module includes a plurality of power transistors connected between a first port and a reference ground. The second module includes a plurality of power transistors connected between a second port and the reference ground. The inductor is connected between the first module and the second module. The first module and/or the second module respectively form multi-level converters with the inductor. In addition, the charging circuit may operate in a buck mode, a boost mode, or a buck-boost mode according to a magnitude relationship between an input voltage and an output voltage.

Fig. 2 is a circuit diagram of a charging circuit according to a first embodiment of the present disclosure. The charging circuit includes a first module, a second module, and an inductor L. The first module and the inductor L form a three-level buck converter. The second module and the inductor L form a boost converter (for example, take a first port BUS as an input port and a second port SYS as an output port for example). In greater detail, the first module includes a first power transistor QHS1, a second power transistor QHS2, a third power transistor QLS2, and a fourth power transistor QLS1 connected in series between the first port BUS and a reference ground sequentially, and a flying capacitor CFLY1 connected between a common connection point of the first power transistor QHS1 and the second power transistor QHS2 and a common connection point of the third power transistor QLS2 and the fourth power transistor QLS1. In addition, the first module further includes a first capacitor Cin connected between the first port BUS and the reference ground. The second module includes a fifth power transistor QHS3 and a sixth power transistor QLS3 connected in series between the second port SYS and the reference ground, a second capacitor Csys connected between the second port SYS and the reference ground, and a battery BAT and a seventh power transistor QBAT connected in series between the second port SYS and the reference ground. The seventh power transistor QBAT is controlled to work in a complete conduction region, a linear region, or a cutoff region according to a charging state of the battery BAT to satisfy requirements of battery charging. The inductor L is connected between a middle node of the first module, that is, a common connection point of the second power transistor QHS2 and the third power transistor QLS2, and a middle node of the second module, that is, a common connection point of the fifth power transistor QHS3 and the sixth power transistor QLS3.

It should be understood that in the present embodiment the first module having three levels is taken as an example for illustration. Persons skilled in the art are able to readily conceive that the first module may have more levels, so that the first module and the inductor constitute a multi-level converter.

In addition, for convenience of description, the first port BUS serving as the input port and the second port SYS serving as the output port is taken as an example for illustration in the following paragraphs. Ordinary persons skilled in the art are able to readily deduce the situation that the first port BUS is the output port and the second port SYS is the input port, and thus detailed description in this regard is not provided.

In the present embodiment, the charging circuit has three operating modes. When an input voltage VBUS of the first port BUS is significantly higher than an output voltage VSYS of the second port SYS, that is, when a ratio of the input voltage VBUS to the output voltage VSYS is higher than a first threshold value, the charging circuit is in a three-level buck mode. When the input voltage VBUS is significantly lower than the output voltage VSYS, that is, when the ratio of the input voltage VBUS to the output voltage VSYS is lower than a second threshold value, the charging circuit is in a boost mode. When the input voltage VBUS approaches the output voltage VSYS, that is, when the ratio of the input voltage VBUS to the output voltage VSYS is between the first threshold value and the second threshold value, the charging circuit enters a buck-boost mode to realize smooth switching between a buck mode and the boost mode.

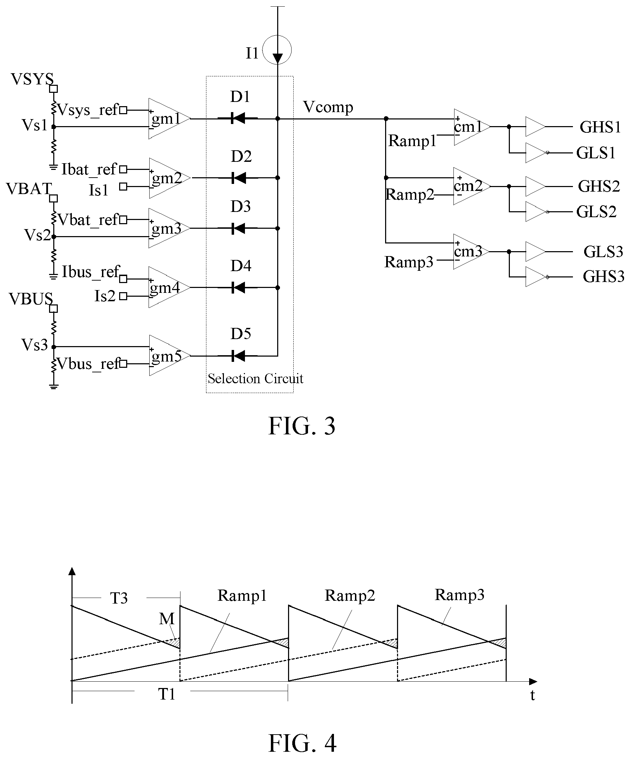

Fig. 3 is a logic block diagram of a control circuit of a charging circuit according to one embodiment of the present disclosure. The control circuit may select control parameters depending on practical needs to allow itself to meet the requirements. In the present embodiment, the control circuit is configured to receive a plurality of control parameters and a plurality of reference signals respectively corresponding to the plurality of control parameters, so as to control one of the control parameters to be equal to its corresponding reference signal, and to control the other control parameters except for the input voltage VBUS to be not greater than their corresponding reference signals.

In greater detail, the control circuit includes an error amplifier gm1, an error amplifier gm2, an error amplifier gm3, an error amplifier gm4, and an error amplifier gm5. The error amplifier gm1 receives a first voltage sampling signal Vs1 representing the output voltage VSYS and a first voltage reference signal Vsys ref to output a first compensation signal based on an error between the first voltage sampling signal Vs1 and the first voltage reference signal Vsys ref. The error amplifier gm2 receives a first current sampling signal Is1 representing a charging current IBAT and a first current reference signal Ibat_ref to output a second compensation signal based on an error between the first current sampling signal Is1 and the first current reference signal Ibat_ref. The error amplifier gm3 receives a second voltage sampling signal Vs2 representing a battery voltage VBAT and a second voltage reference signal Vbat_ref to output a third compensation signal based on an error between the second voltage sampling signal Vs2 and the second voltage reference signal Vbat_ref . The error amplifier gm4 receives a second current sampling signal Is2 representing an input current IBUS and a second current reference signal Ibus_ref to output a fourth compensation signal based on an error between the second current sampling signal Is2 and the second current reference signal Ibus_ref. The error amplifier gm5 receives a third voltage sampling signal Vs3 representing the input voltage VBUS and a third voltage reference signal Vbus_ref to output a fifth compensation signal based on an error between the third voltage sampling signal Vs3 and the third voltage reference signal Vbus_ref. Additionally, the control circuit further includes a selection circuit that receives signals output by the error amplifiers and selects a smallest one among the signals output by the error amplifiers to output it as a compensation signal Vcomp. In the present embodiment, the selection circuit includes a plurality of diodes, cathodes of the diodes are respectively connected to output terminals of the error amplifiers, and anodes of all the diodes are connected together to select and output the smallest one of the signals output by all the error amplifiers as the compensation signal Vcomp. In greater detail, the error amplifier gm1 is connected to a cathode of a diode D1, the error amplifier gm2 is connected to a cathode of a diode D2, the error amplifier gm3 is connected to a cathode of a diode D3, the error amplifier gm4 is connected to a cathode of a diode D4, and the error amplifier gm5 is connected to a cathode of a diode D5. Anodes of the diodes D1-D5 are connected together. In addition to, the control circuit further includes a current source I1 connected between a power supply and the anode of the diode D1 to adjust the compensation signal Vcomp.

Persons skilled in the art should understand that the circuit for selecting the smallest one of the signals output by the error amplifiers as the compensation signal is not limited thereto, and any other circuit capable of realizing this function is within the scope of the present disclosure.

In the present embodiment, for example, in a scenario of fast charging, when the second voltage sampling signal Vs2 representing the battery voltage VBAT has not reached the second voltage reference signal Vbat_ref, the control circuit will generate the compensation signal Vcomp based on the error between the first current sampling signal Is1 representing the charging current IBAT and the first current reference signal Ibat_ref, so as to control a switching state of each of power transistors. As a result, the first current sampling signal IBAT is adjusted to be equal to the first current reference signal Ibat_ref, that is, the charging current is maintained at an expected current value to perform constant current charging. At the same time, the charging circuit satisfies the following conditions: the first voltage sampling signal Vs1 is less than or equal to the first voltage reference signal Vsys ref, the second current sampling signal Is2 is less than or equal to the second current reference signal Ibus_ref, the second voltage sampling signal Vs2 representing the battery voltage VBAT is less than or equal to the second voltage reference signal Vbat_ref, and the third voltage sampling signal Vs3 representing the input voltage VBUS is greater than or equal to the third voltage reference signal Vbus_ref.

As the battery voltage VBAT increases, the second voltage sampling signal Vs2 will reach the second voltage reference signal Vbat_ref At this time, the compensation signal Vcomp is determined by the error between the second voltage sampling signal Vs2 and the second voltage reference signal Vbat_ref, so that the second voltage sampling signal Vs2 is maintained at the second voltage reference signal Vbat_ref That is, the battery voltage VBAT is equal to an expected voltage value, and the charging circuit is switched to constant voltage charging. At the same time, the charging circuit satisfies the following conditions: the first current sampling signal Is1 representing the charging current IBAT is less than or equal to the first current reference signal Ibat_ref, the first voltage sampling signal Vs1 representing the output voltage VSYS is less than or equal to the first voltage reference signal Vsys ref, the second current sampling signal Is2 representing the input current IBUS is less than or equal to the second current reference signal Ibus ref, and the third voltage sampling signal Vs3 representing the input voltage VBUS is greater than or equal to the third voltage reference signal Vbus_ref.

It should be understood that, among the above several control parameters, the input voltage VBUS, the battery voltage VBAT, the output voltage VSYS, the input current IBUS, and the charging current IBAT, when one of the control parameters acts to determine a value of the compensation signal Vcomp, this control parameter is maintained at a reference signal correspondingly, and the other control parameters except for the input voltage VBUS are all not greater than reference signals correspondingly. The input voltage VBUS is not smaller than a reference signal correspondingly. If the above conditions are not met, the charging circuit would stop working.

In addition, the control circuit is further configured to compare the compensation signal Vcomp with a first ramp signal Ramp1, a second ramp signal Ramp2, and a third ramp signal Ramp3, respectively, so as to generate drive signals for the power transistors of the first module and the second module. In greater detail, the control circuit further includes a comparator cm1, a comparator cm2, and a comparator cm3. The comparator cm1 is configured to compare the compensation signal Vcomp with the first ramp signal Ramp1 so as to generate a drive signal GHS1 for controlling the power transistor QHS1 and a drive signal GLS1 for controlling the power transistor QLS1, and the drive signals GHS1 and GLS1 are complementary to each other. When the compensation signal Vcomp is greater than the first ramp signal Ramp1, drive signal GHS1 is effective (i.e., at a high level) and drive signal GLS1 is ineffective (i.e., at a low level). The comparator cm2 is configured to compare the compensation signal Vcomp with the second ramp signal Ramp2 so as to generate a drive signal GHS2 for controlling the power transistor QHS2 and a drive signal GLS2 for controlling the power transistor QLS2, and the drive signals GHS2 and GLS2 are complementary to each other. When the compensation signal Vcomp is greater than the second ramp signal Ramp2, drive signal GHS2 is effective (i.e., at a high level) and drive signal GLS2 is ineffective (i.e., at a low level). The comparator cm3 is configured to compare the compensation signal Vcomp with the third ramp signal Ramp3 so as to generate a drive signal GHS3 for controlling the power transistor QHS3 and a drive signal GLS3 for controlling the power transistor QLS3, and the drive signals GHS3 and GLS3 are complementary to each other. When the compensation signal Vcomp is greater than the third ramp signal Ramp3, drive signal GLS3 is effective (i.e., at a high level) and drive signal GHS3 is ineffective (i.e., at a low level).

Fig. 4 is a waveform diagram of ramp signals in a control circuit according to one embodiment of the present disclosure. As shown in Fig. 4, a period of the first ramp signal Ramp1 and a period of the second ramp signal Ramp2 are the same, both are T1. Also, amplitudes of the first ramp signal Ramp1 and the second ramp signal Ramp2 are the same, and change trends of the first ramp signal Ramp1 and the second ramp signal Ramp2 are the same, both of them are ramps with an increasing trend, and there is a phase difference of 180° between the first ramp signal Ramp1 and the second ramp signal Ramp2. A period T3 of the third ramp signal Ramp3 is half of the period T1 of the first ramp signal Ramp1, and change trend of the third ramp signal Ramp3 is opposite to the change trend of the first ramp signal Ramp1, and is a rampe with a decreasing trend. At the same time, a minimum value of the third ramp signal Ramp3 is slightly lower than a maximum value of the first ramp signal Ram1 or the second ramp signal Ram2, so that the third ramp signal Ramp3 intersects the first ramp signal Ram1 or the second ramp signal Ram2 in every period T3, as shown by hatched portions M in the figure.

It should be understood that, in the present embodiment, since an inductor current has a frequency multiplication effect in the three-level buck mode, a switching frequency in the boost mode is set to be twice that in the buck mode to achieve a better effect. However, in other applications, persons skilled in the art may set the switching frequency in the boost mode to be the same as the switching frequency in the buck mode, that is, the period T3 of the third ramp signal Ramp3 is the same as the period T1, or may set it to other situations. The present disclosure only provides an example of one of control methods, which is not intended to limit the embodiments of the present disclosure.

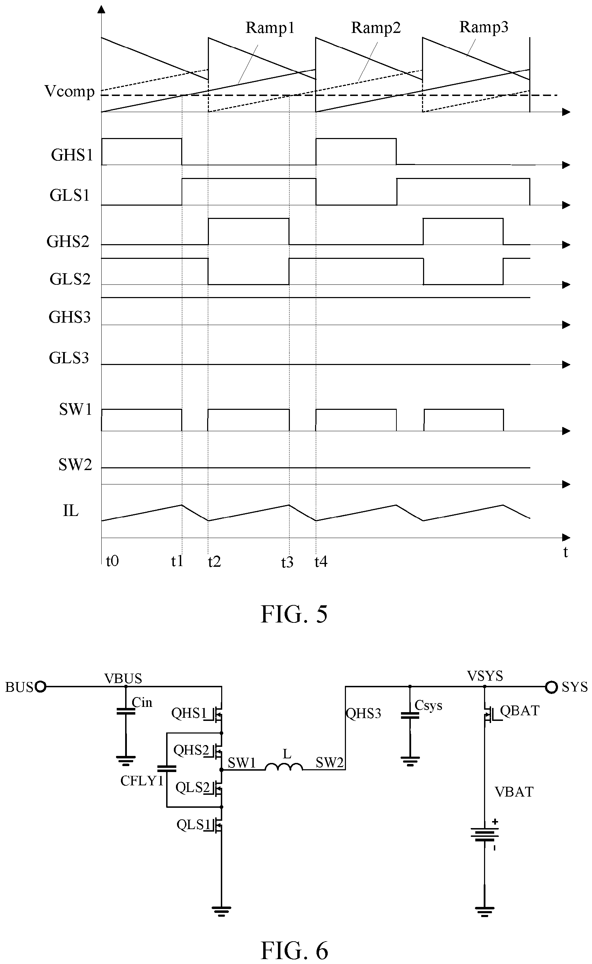

In the following, three different operating modes of the charging circuit are described. Fig. 5 is a waveform diagram of example operation of a charging circuit in a buck mode according to one embodiment of the present disclosure. Fig. 6 is an equivalent circuit diagram of a charging circuit in a buck mode according to one embodiment of the present disclosure. When the input voltage VBUS is significantly higher than the output voltage VSYS, the charging circuit is in the three-level buck mode. The power transistors of the first module are in a pulse width modulation (PWM) switching state, and the power transistors of the second module are kept normally on or off. The working principle of the charging circuit in the buck mode is described below with reference to Fig. 5 and Fig. 6.

As shown in Fig. 5, the compensation signal Vcomp is always smaller than a lowest value of the ramp signal Ramp3 in the buck mode, so that the drive signal GHS3 is always at a high level and the drive signal GLS3 is always at a low level, that is, the power transistor QHS3 is always turned on and the power transistor QLS3 is always turned off. At this time, the equivalent circuit diagram of the charging circuit is shown in Fig. 6, the charging circuit is a three-level buck converter, and a potential of a node SW2 is equal to output voltag e VSYS.

In the buck mode, the power transistors QHS1 and QLS1 are controlled under PWM switching operations, and the switching states of the power transistors QHS1 and QLS1 are complementary to each other. Additionally, the power transistors QHS2 and QLS2 are controlled under the PWM switching operations, and the switching states of the power transistors QHS2 and QLS2 are complementary to each other. A phase shift angle between the drive signal GHS1 and the drive signal GHS2 is 180 degrees (°). With additional reference to Fig. 5, when the compensation signal Vcomp is greater than the ramp signal Ramp1, the drive signal GHS1 is at the high level and the drive signal GLS1 is at the low level. When the compensation signal Vcomp is smaller than the ramp signal Ramp1, the drive signal GLS1 is at the high level and the drive signal GHS1 is at the low level. Similarly, when the compensation signal Vcomp is greater than the ramp signal Ramp2, the drive signal GHS2 is at the high level and the drive signal GLS2 is at the low level. When the compensation signal Vcomp is smaller than the ramp signal Ramp2, the drive signal GLS2 is at the high level and the drive signal GHS2 is at the low level.

With additional reference to Fig. 5 and Fig. 6. During time period t0-t1, the power transistors QHS1 and QLS2 are turned on at the same time, and a conductive path is: the first port BUS, the power transistor QHS1, the flying capacitor CFLY1, the power transistor QLS2, the inductor L, the power transistor QHS3, and the second port SYS. The input voltage VBUS charges the flying capacitor CFLY1, and provides energy to the battery BAT and the other electrical loads. At this time, a potential of a node SW1 is equal to a difference between the input voltage VBUS and a voltage VCFLY1 across the flying capacitor CFLY1, and an inductor current IL rises. During time period t1-t2, the power transistors QLS1 and QLS2 are turned on at the same time, the potential of the node SW1 is zero, the inductor current IL freewheels through QLS1 and QLS2, the inductor L discharges energy to the second port SYS, and the inductor current IL decreases. During time period t2-t3, the power transistors QLS1 and QHS2 are turned on at the same time, and the flying capacitor CFLY1 discharges energy to the battery BAT and the other electrical loads. The conductive path is: the flying capacitor CFLY1, the power transistor QHS2, the inductor L, the power transistor QHS3, the second port SYS, the power transistor QLS1. At this time, the potential of the node SW1 is the voltage VCFLY1 across the flying capacitor CFLY1.which is the same as that during time period t0-t1 because VCLFY1=1/2VBUS under normal circumstances. Also, the inductor current IL rises during time period t1-t2. During time period t3-t4, the power transistors QLS1 and QLS2 are turned on at the same time, the potential of the node SW1 is zero, the inductor current IL freewheels through QLS1 and QLS2, the inductor L discharges energy to the second port SYS, and the inductor current IL decreases. At this point, one work cycle (i.e., t0-t4) ends. Here, the work cycle refers to a cycle during which the circuit completes the switching of the working states and begins to repeated in a next cycle.

For convenience of description, the description of the embodiments of the present disclosure ignores a dead time. It should be understood that in practical applications, in order to avoid the direct connection of the two complementary power transistors, the dead time generally needs setting. In addition, the above description only takes a duty ratio to be less than 0.5 as an example for illustration, persons skilled in the art can readily extend it to the situation where the duty ratio is greater than 0.5, and the description in this regard is not provided here.

Owing to the three-level structure, withstand voltages of the power transistors QHS2, QLS1, and QLS2 are all 1/2 VBUS, which is reduced by half as compared with that in Fig. 1. The inductor current has the frequency multiplication effect, and a voltage difference across two terminals of the inductor is reduced. The required inductance may be reduced, and the overall efficiency of the charging circuit is improved.

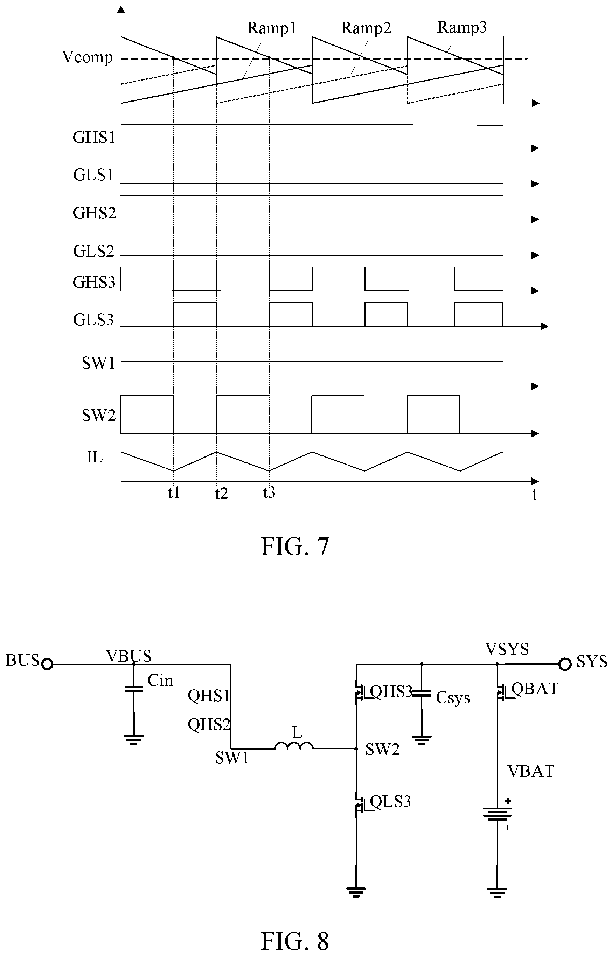

Fig. 7 is a waveform diagram of example operation of a charging circuit in a boost mode according to one embodiment of the present disclosure. Fig. 8 is an equivalent circuit diagram of a charging circuit in a boost mode according to one embodiment of the present disclosure. When the input voltage VBUS is significantly lower than the output voltage VSYS, the charging circuit is in the boost mode. The power transistors of the first module are kept normally on or off, and the power transistors of the second module are in the PWM switching state to be alternately turned on and off. The working principle of the charging circuit in the boost mode is described below with reference to Fig. 7 and Fig. 8.

As shown in Fig. 7, in the boost mode, the compensation signal Vcomp is always higher than highest values of the ramp signals Ramp1 and Ramp2, so the drive signals GHS1 and GHS2 are always at the high level and the drive signals GLS1 and GLS2 are always at the low level, that is, the power transistors QHS 1 and QHS2 are always turned on and the power transistors QLS1 and QLS2 are always turned off. The equivalent circuit diagram of the charging circuit is shown in Fig. 8. The charging circuit is the same as a traditional boost converter, and the potential of the node SW1 is always equal to the input voltage VBUS.

In addition, the compensation signal Vcomp intersects the ramp signal Ramp3, so that the power transistors QHS3 and QLS3 are controlled under the PWM switching operations, and the switching states of the power transistors QHS3 and QLS3are complementary to each other. In greater detail, when the compensation signal Vcomp is smaller than the ramp signal Ramp3, the drive signal GHS3 is at the high level and the drive signal GLS3 is at the low level. When the compensation signal Vcomp is greater than the ramp signal Ramp3, the drive signal GLS3 is at the high level and the drive signal GHS3 is at the low level.

With additional reference to Fig. 7 and Fig. 8. During time period t1-t2, the power transistor QLS3 is turned on, the power transistor QHS3 is turned off, and the conductive path is: the first port BUS, the power transistor QHS1, the power transistor QHS2, the inductor L, the power transistor QLS3 to the reference ground. At this time, the node SW2 is at the low level, so the input voltage VBUS stores energy in the inductor L at this stage, and the inductor current IL rises. During time period t2-t3, the power transistor QHS3 is turned on, the power transistor QLS3 is turned off, and the conductive path is: the first port BUS, the power transistor QHS1, the power transistor QHS2, the inductor L, the power transistor QHS3 to the second port SYS. At this time, the potential of the node SW2 is equal to the output voltage VSYS. The inductor L discharges energy to the battery BAT and the electrical load. The inductor current IL decreases. At this point, one work cycle ends. An operating frequency in the boost mode is twice that in the three-level buck mode. It should be understood that when it is a multi-level converter, the setting of the switching frequency in the boost mode depends on the number of levels.

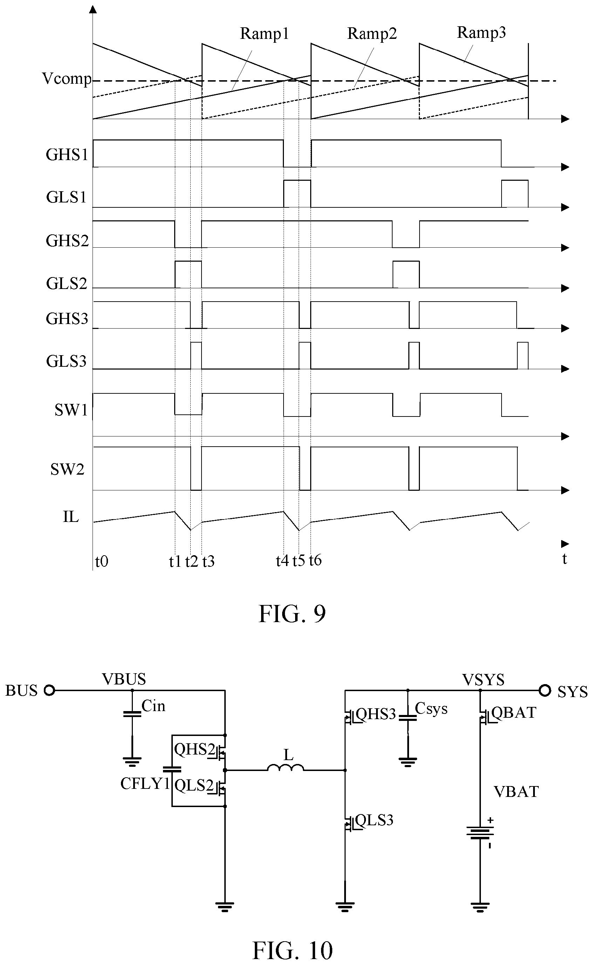

In order to achieve smooth switching between the buck mode and the boost mode, a buck-boost mode is introduced. Fig. 9 is an operating waveform diagram of a charging circuit in a buck-boost mode according to one embodiment of the present disclosure. The working principle of the charging circuit in the buck-boost mode is described below with reference to FIG. 2 and FIG. 9. When the input voltage VBUS approaches the output voltage VSYS, the charging circuit is in the buck-boost mode. The compensation signal Vcomp intersects all the ramp signals Ramp1, Ramp2, and Ramp3, so that the power transistors QHS1, QLS1, QHS2, QLS2, QHS3, and QLS3 are all controlled to operate in the PWM switching state. In the following, the input voltage VBUS being slightly higher than the output voltage VSYS is taken as an example for illustration.

With additional reference to Fig. 2 and Fig. 9. During time period t0-t1, the power transistors QHS1, QHS2 and QHS3 are all turned on, and the conductive path is: the first port BUS, the power transistor QHS1, the power transistor QHS2, the inductor L, the power transistor QHS3 to the second port SYS. The potential of the node SW1 is equal to the input voltage VBUS, and the potential of the node SW2 is equal to the output voltage VSYS. During this period, the input voltage VBUS provides energy to the battery BAT and the electrical load. The inductor current IL rises. During time period t1-t2, the power transistors QHS1, QLS2 and GHS3 are turned on, and the conductive path is: the first port BUS, the power transistor QHS1, the flying capacitor CFLY1, the power transistor QLS2, the inductor L, the power transistor QHS3 to the second port SYS. The potential of the node SW1 is equal to VBUS-VCFLY1=0.5 VBUS and the potential of the node SW2 is equal to output voltage VSYS, so that the input voltage VBUS charges the flying capacitor CFLY1 and supplies power to the load together with the inductor L. The inductor current IL decreases. During time period t2-t3, the power transistors QHS1, QLS2 and QLS3 are turned on, and the conductive path is: the first port BUS, the power transistor QHS1, the flying capacitor CFLY1, the power transistor QLS2, the inductor L, and the power transistor QLS3 to the reference ground. At this time, the potential of the node SW1 is equal to VBUS-VCFLY1=0.5 VBUS, and the potential of node SW2 is equal to zero. During this period, the input voltage VBUS charges the flying capacitor CFLY1, and stores energy in the inductor L at the same time. Hence, the inductor current IL rises. During time period t3-t4, the power transistors QHS1, QHS2, and QHS3 are turned on, which is the same as the time period from t0 to t1. During time period t4-t5, the power transistors QLS1, QHS2 and QHS3 are turned on, and the conductive path is: the flying capacitor CFLY1, the power transistor QHS2, the inductor L, the power transistor QHS3, the second port SYS, the power transistor QLS1, and then return to the flying capacitor CFLY1. The potential of node SW1 is equal to the VCLFY1=0.5VBUS and the potential of the node SW2 is equal to the output voltage VSYS, so that the flying capacitor CFLY1 and the inductor L jointly discharge energy to the battery BAT and the electrical load. Hence, the inductor current IL decreases. During time period t5-t6, the power transistors QLS1, QHS2, and QLS3 are turned on, and the conductive path is: the flying capacitor CFLY1, the power transistor QHS2, the inductor L, the power transistor QLS3, and the power transistor QLS 1, then return to the flying capacitor CLFY1. The potential of the node SW1 is equal to the voltage VCLFY1 across the flying capacitor CFLY1, and VCLFY1=0.5VBUS, and the potential of the node SW2 is equal to zero. During this period, the flying capacitor CFLY1 discharges energy to the inductor L to store energy, and the inductor current IL rises. At this point, one work cycle ends.

It should be understood that since the efficiency of the charging circuit in the buck-boost mode is lower than that in the boost mode or the buck mode under the same conditions, it is not intended that the charging circuit operates in the buck-boost mode for a long time. Therefore, the minimum value of the ramp signal Ramp3 is only slightly smaller than the maximum values of the ramp signals Ramp1 and Ramp2 when designing parameters of the ramp signals. For example, if the maximum value of the ramp signal Ramp1 is 1, the minimum value of Ramp3 is set to 0.9, so that the charging circuit can have a smooth transition between the boost mode and the buck mode.

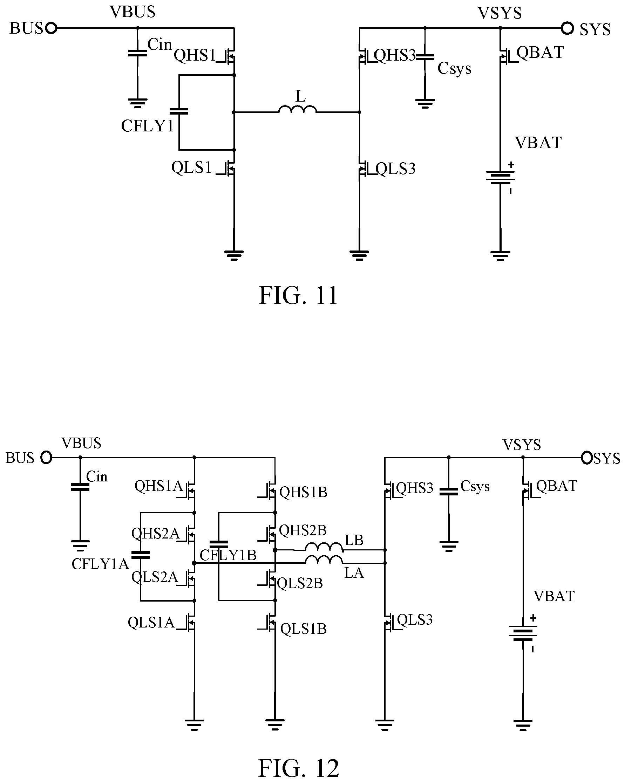

Additionally, the buck-boost mode may further be implemented by using a method similar to a traditional four-switch buck-boost converter. In one implementation method, the power transistors QHS1 and QLS1 are always kept in the turn-on state, and the power transistors QHS2, QLS2, QHS3, and QLS3 are in the PWM switching state. At this time, the flying capacitor CFLY1 is equivalent to being connected between the input voltage VBUS and the reference ground, which does not affect the operation of the circuit, as show in Fig. 10. In another implementation method, the power transistors QHS2 and QLS2 are always kept in the turn-on state, and the power transistors QHS1, QLS1, QHS3, and QLS3 are in the PWM switching state. At this time, the flying capacitor CFLY1 is short-circuited, as shown in Fig. 11. Since the working principle of the two types of circuits is the same as that of a traditional four-switch buck-boost converter, the description is not provided here.

It should be understood that the above control methods are all examples and are not intended to limit the control method of the charging circuit provided by the present disclosure. Persons skilled in the art may readily use other suitable control methods to control the working state of the charging circuit under the inspiration of the embodiments of the present disclosure.

In summary, the present disclosure provides an asymmetric multi-level buck-boost charging circuit, which may operate in the buck mode, the boost mode, and the buck-boost mode. The first module of the charging circuit adopts a multi-level structure, which may reduce switching loss, withstand voltage requirements of power components and inductance, and may improve the efficiency of the charging circuit as compared with a traditional buck-boost charging circuit. The power is significantly increased to be adapted to the USB PD3.1 power adapter with a higher power without obviously increasing the system cost and the area required by the solution. At the same time, from the perspective of power supply architecture, the system voltage range of the charging circuit is consistent with that of a traditional NVDC buck-boost charger, and the charging circuit may support a low-voltage input and is compatible with a traditional power supply architecture. To sum up, this solution may not only provide high efficiency but also maintain good compatibility without too much compromise.

In the above description the first port is the input port and the second port is the output port is for example. Persons skilled in the art can understand that when the first port is the output port and the second port is the input port, the charging circuit according to the present disclosure may similarly operate in the buck mode, the boost mode, and the buck-boost mode. For example, in a reverse buck mode, the power transistors QHS1 and QHS2 are always in the conduction state, the power transistors QLS1 and QLS2 are always in an off state, and the power transistors QHS3 and QLS3 operate in the PWM switching state. The charging circuit is equivalent to a buck converter with the second port being the input port and the first port being the output port, thereby realizing the step-down operation. For another example, the power transistor QHS3 is always in the conduction state, the power transistor QLS3 is always in the off state, and the other power transistors QHS1, QHS2, QLS1 and QLS2operate in the PWM switching state. The charging circuit is equivalent to a three-level boost converter, thereby realizing the step-up operation. Since the reverse buck-boost mode is similar to the forward buck-boost mode, a description in this regard is not provided here.

In addition, the first module may not be limited to a single-phase multi-level structure, and may further be a multi-phase multi-level structure to further reduce the inductor current and input and output ripples, thereby achieving a better efficiency and a higher power. Fig. 12 is a circuit diagram of a charging circuit according to a second embodiment of the present disclosure. As shown in Fig 12, the first module includes two parallel branches. A first branch includes power transistors QHS1A, QHS2A, QLS2A, and QLS1A connected in series between the first port BUS and the reference ground sequentially, and a flying capacitor CFLY1A connected between a common connection point of the power transistors QHS1A and QHS2A and a common connection point of the power transistors QLS2A and QLS1A. A second branch includes power transistors QHS1B, QHS2B, QLS2B, and QLS1B connected in series between the first port BUS and the reference ground sequentially, and a flying capacitor CFLY1B connected between a common connection point of the power transistors QHS1B and QHS2B and a common connection point of the power transistors QLS2B and QLS1B. Additionally, an inductor LA is connected between a middle node of the first branch, that is, a common connection point of the power transistors QHS2A and QLS2A, and the common connection point of the power transistors QHS3 and QLS3 in the second module. An inductor LB is connected between a middle node of the second branch, that is, a common connection point of the power transistors QHS2B and QLS2B, and the common connection point of the power transistors QHS3 and QLS3 in the second module. Since the other structures are the same as the charging circuit in Fig. 2, the description in this regard is not provided. Persons skilled in the art are able to understand that Fig. 12 only provides a two-phase structure. In some embodiments, the charging circuit may have more phases, and the control of each of the phases may be the same as that described in the above embodiments. In other embodiments, a phase-shifting method may be adopted to control the phases, the working time sequences of every two phases have a phase difference. A description in this regard is not provided.

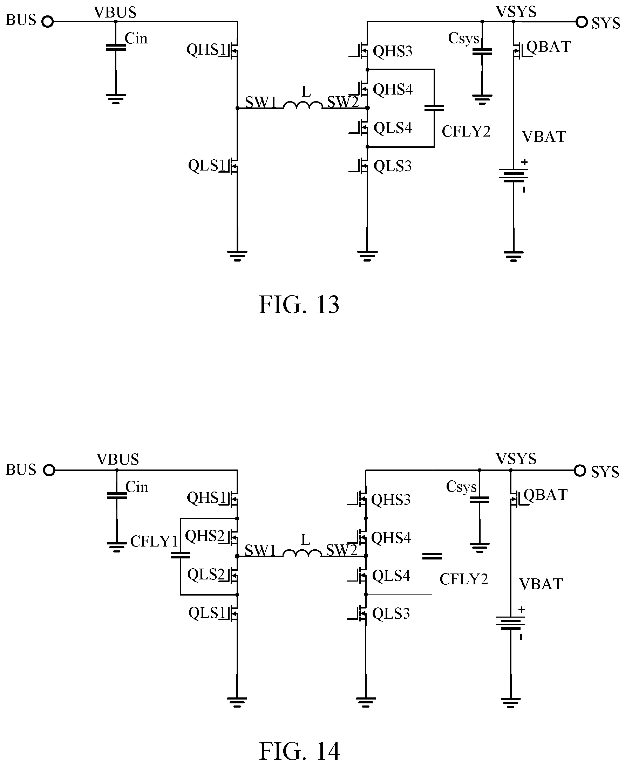

In addition, the above disclosure is provided by taking the first module being a three-level structure as an example for illustration. In other embodiments, the second module may be configured as a three-level structure. As shown in Fig. 13, when the first port BUS is an input port and the second port SYS is an output port, the first module and the inductor L form a buck converter, and the second module and the inductor L form a three-level boost converter, thereby improving the efficiency of the second module. And then, both the first module and the second module may have a three-level structure, as shown in FIG. 14. It should be understood that, here the three-level structure is taken as an example, the multi-level converter formed in the embodiments can also be with more levels and with multiple phases. Persons skilled in the art are able to configure the structure of the charging circuit depending on the conditions of actual input voltage and output voltage and application requirements, so as to achieve the optimal efficiency.

Although the embodiments disclosed by the present disclosure are discussed above, the embodiments are provided for better understanding of the present disclosure rather than to limit the present disclosure. Anyone skilled in the art, without departing from the spirit or scope of the present disclosure, can make amendments or modification to the present disclosure. Any modification, equivalent replacement, improvement, etc. made within the spirit and principle of the present disclosure shall be within the scope of the present disclosure.

## Claims

1. A charging circuit, **characterized in that** the charging circuit comprises:
a first module comprising a plurality of power transistors (QHS1, QHS2, QLS2, QLS1), and being connected between a first port (BUS) and a reference ground;
a second module comprising a plurality of power transistors (QHS3, QLS3) , and being connected between a second port (SYS) and the reference ground; and
at least one inductor (L) connected between the first module and the second module;
wherein the first module or the second module respectively forms multi-level converters with the at least one inductor (L); or
wherein the first module and the second module respectively form multi-level converters with the at least one inductor (L).

2. The charging circuit according to claim 1, **characterized in that** the charging circuit is configured to be controlled to respectively operate in a buck mode or a boost mode or a buck-boost mode according to a magnitude relationship between an input voltage (VBUS) and an output voltage (VSYS).

3. The charging circuit according to claim 2, **characterized in that**, the power transistors of the charging circuit are controlled by a control circuit to be in different switching states, such that the charging circuit is smoothly switched among the buck mode, the boost mode or the buck-boost mode.

4. The charging circuit according to any one of claims 1 to 3, **characterized in that** the first module and the inductor (L) form a multi-level buck converter, the second module and the inductor (L) form a boost converter, wherein the first port (BUS) receives an input voltage (VBUS), and the second port (SYS) generates an output voltage (VSYS).

5. The charging circuit according to claim 4, **characterized in that** when a ratio of the input voltage (VBUS) to the output voltage (VSYS) is higher than a first threshold value, the charging circuit operates in a multi-level buck mode; when the ratio of the input voltage (VBUS) to the output voltage (VSYS) is lower than a second threshold value, the charging circuit operates in a boost mode; when the ratio of the input voltage (VBUS) to the output voltage (VSYS) is between the first threshold value and the second threshold value, the charging circuit operates in a buck-boost mode.

6. The charging circuit according to claim 5, **characterized in that** when the charging circuit operates in the multi-level buck mode, the power transistors (QHS1, QHS2, QLS2, QLS1) of the first module are in a PWM switching state to be alternately turned on and off, the power transistors (QHS3, QLS3) of the second module are kept normally on or off; and/or
**characterized in that** when the charging circuit operates in the boost mode, the power transistors (QHS1, QHS2, QLS2, QLS1) of the first module are kept normally on or off, the power transistors (QHS3, QLS3) of the second module are in a PWM switching state to be alternately turned on and off.

7. The charging circuit according to any one of claims 5 or 6, **characterized in that** a switching frequency of the power transistors in a PWM switching state(QHS3, QLS3) in a boost mode is N times a switching frequency of the power transistors in the PWM switching state (QHS1, QHS2, QLS2, QLS1) in a multi-level buck mode, wherein N is a positive integer greater than or equal to 2, and depends on a number of levels of the multi-level converter.

8. The charging circuit according to any one of claims 5 to 7, **characterized in that** when the charging circuit operates in the buck-boost mode, the power transistors (QHS1, QHS2, QLS2, QLS1, QHS3, QLS3) of both the first module and the second module are in a PWM switching state to be alternately turned on and off; or
**characterized in that** when the charging circuit operates in the buck-boost mode, part of the power transistors (QHS1, QLS1 orQHS2, QLS2) in the first module are kept normally on and the other power transistors (QHS2, QLS2 or QHS1, QLS1) in the first module are in a PWM switching state, so that the charging circuit is equivalent to a four-switch buck-boost converter.

9. The charging circuit according to any one of claims 1 to 8, **characterized in that** the first module comprises a first power transistor (QHS1), a second power transistor (QHS2), a third power transistor (QLS2), and a fourth power transistor (QLS1) connected in series between the first port (BUS) and the reference ground sequentially, and a flying capacitor (CFLY1) connected between a common connection point of the first power transistor (QHS1) and the second power transistor (QHS2) and a common connection point of the third power transistor (QLS2) and the fourth power transistor (QLS1).

10. The charging circuit according to claim 9, **characterized in that** the second module comprises a fifth power transistor (QHS3) and a sixth power transistor (QLS3) connected in series between the second port (SYS) and the reference ground.

11. The charging circuit according to claim 10, **characterized in that** the inductor (L) is connected between a common connection point (SW1) of the second power transistor (QHS2) and the third power transistor (QLS2) and a common connection point (SW2) of the fifth power transistor (QHS3) and the sixth power transistor (QLS3).

12. The charging circuit according to any one of claims 1 to 11, **characterized in that** the charging circuit further comprises:
a seventh power transistor (QBAT); and
a battery (BAT) connected in series with the seventh power transistor (QBAT) between the second port (SYS) and the reference ground, wherein the seventh power transistor (QBAT) is controlled to work in a complete conduction region, a linear region, or a cutoff region according to a charging state of the battery (BAT) to satisfy requirements of a charging current.

13. The charging circuit according to any one of claims 1 to 12, **characterized in that** the first module and the inductor (L) form a multi-level boost converter, the second module and the inductor (L) form a buck converter, wherein the second port (SYS) receives an input voltage (VBUS), the first port (BUS) generates an output voltage (VSYS).

14. The charging circuit according to any one of claims 1 to 13,
**characterized in that** the multi-level converter formed by the first module comprises a plurality of branches connected in parallel, wherein each of the branches comprises a plurality of power transistors (QHS1A, QHS2A, QLS2A, QLS1A, QHS1B, QHS2B, QLS2B, QLS1B) connected in series between the first port (BUS) and the reference ground, wherein each of the branches is connected to second module respectively through one of the at least one inductor (LA, LB) to form a multi-phase multi-level converter; and/or
**characterized in that** the multi-level converter formed by the second module comprises at least one branch connected in parallel, wherein each of the at least one branch comprises a plurality of power transistors connected in series between the second port (SYS) and the reference ground, wherein each of the at least one branch is connected to first module respectively through one of the at least one inductor (LA, LB) to form a multi-phase multi-level converter.

15. The charging circuit according to any one of claims 1 to 14,
**characterized in that** the first module and the inductor (L) form a buck converter, the second module and the inductor (L) form a multi-level boost converter, wherein the first port (BUS) receives an input voltage (VBUS), the second port (SYS) generates an output voltage (VSYS); or
**characterized in that** the first module and the inductor (L) form a multi-level buck converter, the second module and the inductor (L) form a multi-level boost converter, wherein the first port (BUS) receives an input voltage (VBUS), the second port (SYS) generates an output voltage (VSYS).

16. The charging circuit according to any one of claims 11 to 15, **characterized in that** the charging circuit further comprises:
a control circuit configured to receive a plurality of control parameters (VSYS, IBAT, VBAT, IBUS, VBUS) and a plurality of reference signals (Vsys_ref, Ibat_ref, Vbat_ref, Ibus_ref, Vbus_ref) respectively corresponding to the plurality of control parameters (VSYS, IBAT, VBAT, IBUS, VBUS), so as to control one of the control parameters (IBAT) to be equal to its corresponding reference signal (Ibat_ref) and control the other control parameters (VSYS, VBAT, IBUS, VBUS) to be not greater than or not smaller than their corresponding reference signals (Vsys _ref, Vbat_ref, Ibus_ref, Vbus_ref).

17. The charging circuit according to any one of claims 14 to 16, **characterized in that** the control circuit comprises:
a plurality of error amplifiers (gm1, gm2, gm3, gm4, gm5) respectively receiving the plurality of control parameters (VSYS, IBAT, VBAT, IBUS, VBUS) and the plurality of reference signals (Vsys _ref, Ibat_ref, Vbat_ref, Ibus_ref, Vbus_ref); and
a selection circuit configured to receive output signals of the error amplifiers (gm1, gm2, gm3, gm4, gm5) and select a smallest one among the output signals as a compensation signal (Vcomp).

18. The charging circuit according to any one of claims 15 to 17, **characterized in that** the control circuit further comprises:
a first comparator (cm1) configured to compare the compensation signal (Vcomp) with a first ramp signal (Ramp1) to generate drive signals (GHS1, GLS1) for controlling the first power transistor (QHS1) and the fourth power transistor (QLS1), and the drive signals (GHS1, GLS1) of the first power transistor (QHS1) and the fourth power transistor (QLS1) are complementary to each other;
a second comparator (cm2) configured to compare the compensation signal (Vcomp) with a second ramp signal (Ramp2) to generate drive signals (GHS2, GLS2) for controlling the second power transistor (QHS2) and the third power transistor (QLS2), and the drive signals (GHS2, GLS2) of the second power transistor (QHS2) and the third power transistor (QLS2) are complementary to each other; and
a third comparator (cm3) configured to compare the compensation signal (Vcomp) with a third ramp signal (Ramp3) to generate drive signals (GHS3, GLS3) for controlling the fifth power transistor (QHS3) and the sixth power transistor (QLS3), and the drive signals (GHS3, GLS3) of the fifth power transistor (QHS3) and the sixth power transistor (QLS3) are complementary to each other.

19. The charging circuit according to any one of claims 16 to 18, **characterized in that** a period (T1) of the first ramp signal (Ramp1) and a period (T1) of the second ramp signal (Ramp2) are the same, amplitudes and change trends of the first ramp signal (Ramp 1) and the second ramp signal (Ramp2) are the same, and there is a phase difference of 180° between the first ramp signal (Ramp1) and the second ramp signal (Ramp2), a period (T3) of the third ramp signal (Ramp3) is half of the period (T1) of the first ramp signal (Ramp1), and a change trend of the third ramp signal (Ramp3) is opposite to the change trend of the first ramp signal (Ramp1), a minimum value of the third ramp signal (Ramp3) is lower than a maximum value of the first ramp signal (Ramp1).
